# EUROPEAN PATENT SPECIFICATION

(11) **EP 2 710 897 B1**
(45) Date of publication and mention of the grant of the patent: **17.04.2024**
(21) Application number: 12185367.5
(22) Date of filing: 21.09.2012
(51) Int. Cl.: A22C 17/00

(54) **Device and method for splitting a stream of meat products in a coating process**
Vorrichtung und Verfahren zum Teilen eines Fleischproduktstroms in einem Beschichtungsprozess
Dispositif et procédé pour diviser un flux de produits de viande dans un processus de revêtement

(43) Date of publication of application: 26.03.2014
(73) Proprietor: GEA Food Solutions Bakel B.V., 5761 EN Bakel (NL)
(72) Inventor: Van de Laak, Joop, 5763 PM Milheeze (NL); Van Erp, Joost, 5674 RS Nuenen (NL)
(74) Representative: Wolff, Felix

(56) References cited:
- CH-A5- 643 314
- GB-A- 898 188
- JP-B2- 2 689 139
- US-A- 3 304 732
- US-A1- 2010 021 597
- US-B2- 6 553 931
- US-B2- 7 418 920

## Description

The present invention relates to a splitting device for dividing a food product feed into multiple streams, wherein the device comprises an inlet and multiple outlets.

Such splitting devices are well known from the state of the art and are, for example, utilized in front of a coating device, as it is described in US 7 418 920 B2 and US 6553931, JP 2 689139 B2, US 2010/021597 A1, CH 643 314 A5, GB 898 188 A. In this coater, a granular material, for example flour or breadcrumb material, is conveyed to food products by means of meshed conveyor belts for coating the food products with the granular materials. One particular system to cover the food products with a coating material, is by means of a tumbling process, where the food products and the coating material are fed into a rotating drum. Inside the drum both components are thrown around by the rotating motion and during that process the food products are fully covered with the coating material. The drum can either be placed slightly sloped, or equipped with an internal auger to transport the products from the infeed to the outfeed of the drum. At the outfeed, the coated product is separated from the excess coating material and dropped on a device that moves the coated product to the next process step. This device is usually a conveyor.

It is a problem of the known transport mechanisms that the drum drops the food products onto the discharge conveyor as a relatively narrow line. Due to the rotation of the drum, the food products are lifted only on one side and all food products drop approximately on the same point. Therefore the state of the art suggests to use a multitude of drums, each producing a line of products. However, this concept has the disadvantage that the food product infeed has to be split into a multitude of streams prior to entering the drums.

It was therefore the objective of the present invention to provide a splitting device that is feasible for food products, particularly meat products.

The problem is solved with a splitting device according to claim 1.

The present invention relates to a splitting device that splits a food product feed into multiple streams. The food product feed comprises a multitude of individual food pieces. The food product is preferably meat, more preferably wet, moist and/or sticky meat. The meat is, for example, the inner fillet of a chicken breast. Preferably, at least one extension of the meat product is 5 - 20 cm

The device comprises preferably one single inlet and a multitude, preferably more than two, of outlets. The splitting device splits the food product feed into a multitude of outlets. The outlets are located below the inlet, so that the food products are, on their way from the inlet to one of the outlets, at least partially, preferably entirely, driven by gravity.

The device has the shape of a trough.

According to the present invention, the device comprises at least one product splitting means. One product splitting means is located between two adjacent outlets. The product splitting means is rip- or wall-like shaped.

Since it is unavoidable that some products are getting stuck at the splitting means, which split the feed of food products into multiple streams, the device according to the present invention comprises means to remove the product from these critical points, so that each product moves towards one of the outlets.

The splitting device comprises means to reduce the adhesion force between the food product and the splitting device. Thus, the food product is kept in motion and does not get stuck and blocks the splitting device.

The means are an oscillating, vibrating, rotating and/or linearly moving element, more preferably located upstream from the splitting means, more preferably on top of the splitting means. Preferably, each moving element is positioned in line with a splitting means. The moving element either reduces the adhesion force between the splitting device, particularly the splitting means, and/or drives the food product towards one of the outlets. Particularly, it keeps one or more critical point(s) of the splitting device in motion at which the food product might get stuck.

Preferably, the splitting device comprises vibration means, which vibrate one or more splitting means or the entire splitting device. The vibration means particularly reduce the adhesion force between the device or a part of it and the food product. More particularly, static friction forces between the food product and the splitting device are avoided.

The splitting device comprises a ramp from which the food product drops or slides. The ramp is in direct flow-connection with the infeed. The ramp is divided by the splitting means. A food product which slides and/or falls along the ramp hits the splitting means and is thus directed towards one of the outlets. Thus, the food product feed is essentially split by gravitational force.

Preferably, the splitting device comprises a single infeed, preferably a belt. This infeed is located upstream from the inlet of the splitting device and transports the food products into the splitting device.

The splitting element can comprise a forced product motion, for example when the infeed section comprises at least one, preferably multiple, more preferably diverging infeed belt(s) which transport the food product towards the splitting device. Food products are fed onto the belt(s) as a bulk, but when the belts are preferably moving away from each other, food products will be pulled along with one of the belts, so that the product-bulk is spread. To avoid food product to end up between two belt sections, means to remove the products from the feed splitting means is utilized.

In a preferred embodiment, the splitting device is closed with the exception of its inlet and its outlets. This preferred embodiment has hygienic advantages and it can be assured that no food product or other ingredients are spilled.

Preferably, the splitting device is part of a food-product-coating device. More preferably, the splitting device is located upstream from the food-product-coating device. The food-product-coating device preferably comprises a multitude of drums, wherein the number of outlets of the splitting device is preferably identical to the number of drums of the food-product-coating-device. Preferably, each outlet of the splitting device is combined with a drum coating system and more preferably, a spreader is provided at the outfeed of the drums, respectively. This spreader consists, for example, of any sort of flat surface, that can be placed under any convenient angle. It can be perforated and may be equipped with rugs or other obstacles to guide the products. The device preferably needs a drive to keep the products in motion.

The invention is now explained according to Figures 1 - 8. These explanations do not limit the scope of protection.
- Figure 1: illustrates schematically a device for coating food products in a tumbling drum which is known from the prior art, including an infeed and an outfeed belt.
- Figure 2: illustrates schematically a device for coating food products in a multiple tumbling drum which is known from the prior art, including an infeed and an outfeed belt.
- Figures 3 - 7 & 9: each depict an embodiment of the inventive splitting device.
- Figure 8: depicts an overview of the outfeed side of the drums in a multiple drum situation.

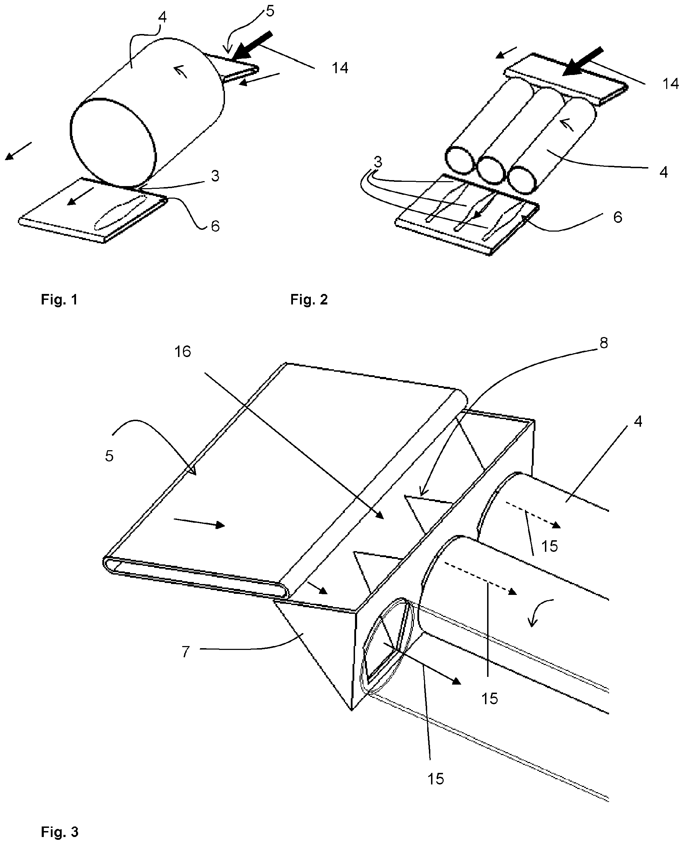

In **figure 1** a device for coating food products in a tumbling drum (4) is depicted, which is known from the prior art, including an infeed (5) and an outfeed belt (6).Typical in this concept is the use of a single drum. Inside the drum, the food products, particularly the meat product is moved around together with a breading substance and thereby coated with breading substance. Sometimes the infeed belt feeds the food products directly into the drum, but sometimes the inner diameter of the drum is smaller than the width of the infeed belt. In those cases, there is some sort of separate device that squeezes the stream of food products together to the required width. This figure shows clearly the narrow line of coated product (3), the way it is thrown out of the drum if no action is taken.

**Figure 2** is essentially the same concept but with multiple drums. Multiple drums, in this example three, produce multiple lanes of coated product (3) that require only a little amount of interaction to be spread out to their share of the total belt width. On the infeed side, it is clear that the infeed belt (5) is not able to fill the three drums (4) properly.

In **figure 3****,** a splitting device (7), here a trough (7), is shown schematically. Essential here is the single infeed (5), which feeds the food products towards the inlet of the splitting device. Food product (not depicted) is dropped and/or slid into the splitting device in which it is guided to one of the multiple outlets (11). Each splitting means (8), here a fin, prevents that food product ends up in any other place than one of the exits. This system has the disadvantage that certain products might drop exactly on top of the splitting area, and might stay there. Therefore the entire splitting means and or part of it are moved to direct this product to one of the outlets and/or to reduce the adhesion force between the splitting means (8) and the food product so that the food product moves, preferably slides, towards one of the outlets (11).

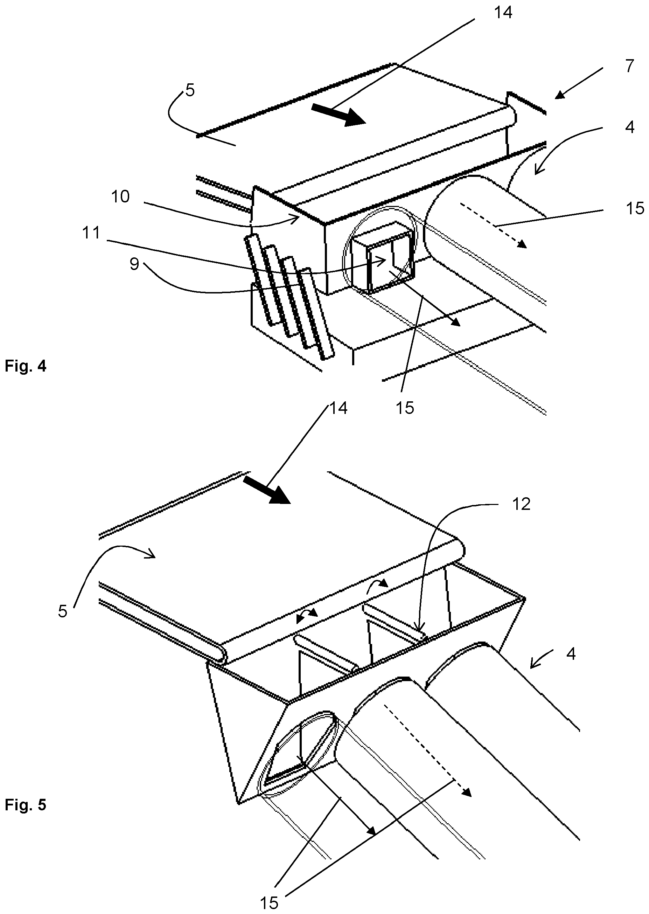

In **figure 4****,** the splitting device (7) is a vibrating device (9). A full belt width stream is fed into the splitting device, here a shaker pan (10), and is then split, here into three product streams (15). Due to the vibration, here of the entire splitting device (7), the adhesion forces between the food product and the splitting device are reduced and it is avoided that food product gets stuck in the spreading device (7). Each outlet is, for example, connected to one drum, in which the product is coated.

In **figure 5****,** an alternative solution is shown. To prevent food product from getting stuck on top of the splitting means (8), as described according to figure 3, a means (12), here a shaft, is located upstream from the splitting means. To avoid food products from getting stuck on or to the means (12), it is moving, here rotating. The rotation can be in a single direction, continuous rotation, an oscillating, two direction rotation, and/or a start/stop system that rotates and/or oscillates at a certain interval, intermittently. Depending on the chosen motion, there can be any kind of drive and transmission. For example, a crankshaft transmission can be used to make the means (12) oscillate, and a belt or chain can be utilized for a rotating motion. In this example, one of the shafts is indicated as oscillating and the other as rotating.

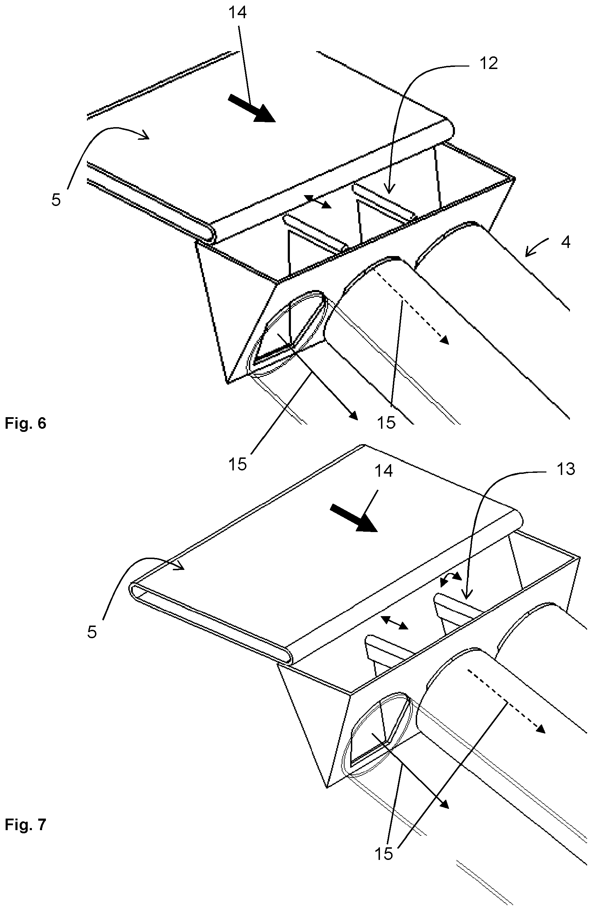

**Figure 6** shows a similar solution to the embodiment depicted in figure 5. Here, the rotating motion is replaced by an axial motion, here a shaking movement. In essence, the principle remains the same.

**Figure 7** shows a solution in which the shaft (12) is replaced by a saddle shaped piece of sheet metal. This piece can oscillate or vibrate. In essence, the function of this piece is the same as the shaft that is described in the previous figures. Like in figure 5, two possible motions are indicated for illustration: oscillating and vibrating.

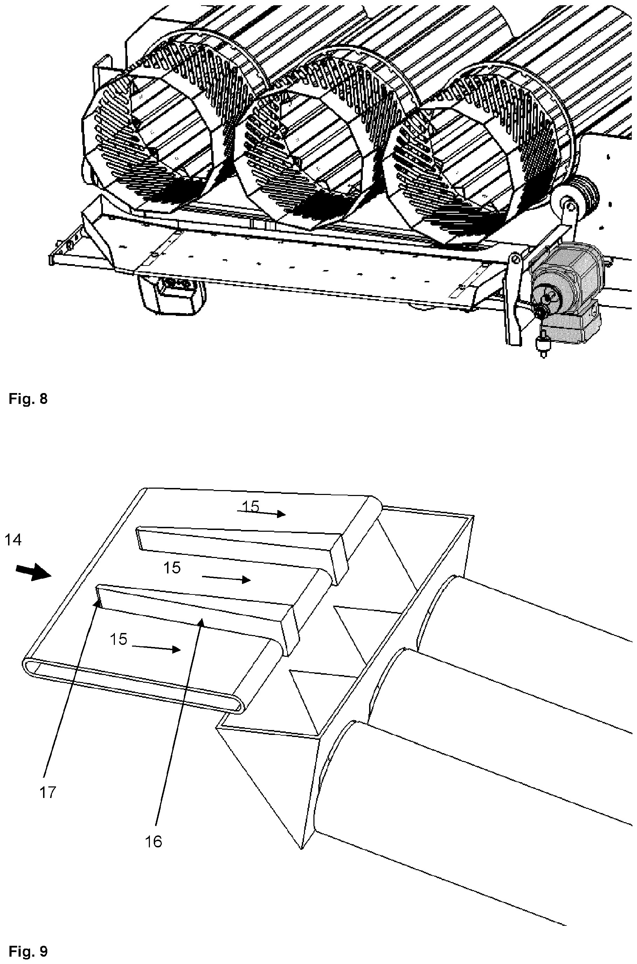

**Figure 8** shows the outfeed of the drums, and a possible spreading system. The drums drop the product on the here flat surface of the spreader system. The rugs, cones and other obstacles are removed for clarity purposes. Even though excess coating material has preferably been removed by the drum, for example by means of the angled slots in the end section of the drum, some of the coating material will most likely fall on the spreader system as well. The example shows a drive that will make the spreader system move, for example shake sideways. Other options are to make the system vibrate in production direction (flow direction of the line), or even vertically, or any combination of these movements that spreads the products on the spreading system. However, some movement is required to prevent the products from sticking to the surface. Please note that in this example the drums are made from folded sheet metal. The cross section is therefore not fully circular.

**Figure 9** shows a different concept, where the actual infeed belt is split into the required number of sections, for example equivalent to the number of downstream coating drums. The products are split by moving the belt sections away from each other. To make sure every product is moved to a single belt section, there has to be some kind of splitting means, here an obstacle (16). To make sure the long and sticky food products don't get stuck at the obstacle (16), moving or vibrating means (17), for example a moving or vibrating nose piece, is provided to remove the food products from the feed splitting means (16), particularly from its tip. Alternatively the entire obstacle can be vibrated.

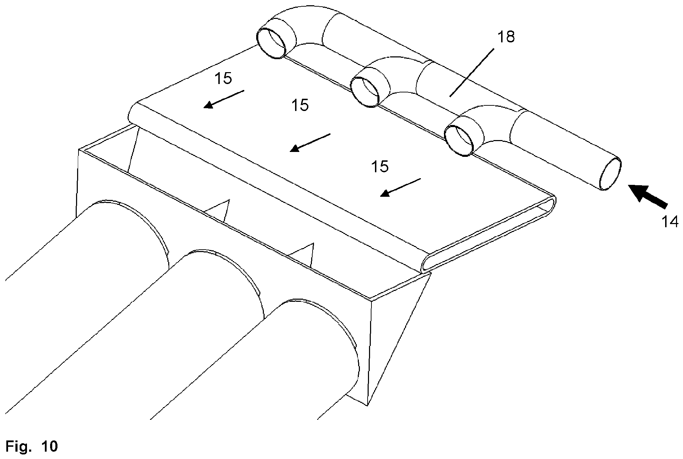

**Figure 10** shows yet another embodiment of the present invention. Here the split of the food product feed 14 into several split streams 15 is carried out with a pipe manifold 18. The feed, here meat, particularly whole muscle products, for example chicken-breasts are pumped into the pipe manifold 18, in which the stream is split and then fed to a transportation belt or the like or directly into a coating apparatus.

### LIST OF REFERENCE SIGNS

- 1: food product
- 2: coating material
- 3: coated product
- 4: drum
- 5: infeed, belt
- 6: outfeed belt
- 7: splitting device
- 8: splitting means / separation area
- 9: vibrator system
- 10: shaker pan
- 11: outlet
- 12: shaft
- 13: saddle
- 14: feed
- 15: split streams
- 16: obstacle
- 17: nose piece
- 18: pipe manifol

## Claims

1. Splitting device (7) of a food product-coating device for dividing a food product feed (14) into multiple streams (15), wherein the splitting device (7) comprises an inlet (16) and multiple outlets (11), wherein the outlets (11) are located below the inlets (16), wherein the device (7) further comprises rip- or wall-like-shaped product feed splitting means (8) located between two adjacent outlets (11) and an oscillating vibrating, rotating and/or linearly moving element (9, 12, 13, 17) to remove the products (3) from the feed splitting means (8), wherein the splitting device comprises a ramp from which the food product drops or slides wherein the ramp is in direct flow -connection with the infeed (5), so that the food product slides and/or falls along the ramp and is thus directed towards one of the outlets by gravitational force, **characterized in, that** the splitting device (7) has the shape of a trough.

2. Splitting device (7) according to claim 1, **characterized in that** it comprises vibration means (9), which is preferably configured to vibrate the entire splitting device (7) or at least a part of it

3. Splitting device (7) according to any of the previous claims, **characterized in that** the entire device is closed.

4. Food-product-coating device (4) comprising a splitting device (7) according to one of the preceding claims.

5. Food-product-coating device (4) according to claim 4, **characterized in that** the entire device (7) is connected to means that extract dust loaded air from it and/or the food-product-coating device (4).

6. Food-product-coating device (4) according to one of claims 4 or 5, **characterized in that** each outlet is combined with a drum coating system (4) and preferably a compact spreader on the outfeed side of the drums.

## Patentansprüche

1. Teilungsvorrichtung (7) einer Nahrungsmittelproduktbeschichtungsvorrichtung zum Teilen einer Nahrungsmittelproduktzufuhr (14) in mehrere Ströme (15), wobei die Teilungsvorrichtung (7) einen Einlass (16) und mehrere Auslässe (11) umfasst, wobei sich die Auslässe (11) unter den Einlässen (16) befinden, wobei die Vorrichtung (7) ferner rippen- oder wandartig geformte Nahrungsmittelzufuhrteilungseinrichtungen (8), die sich zwischen zwei angrenzenden Auslässen (11) befinden, und ein schwingend vibrierendes, rotierendes und/oder sich linear bewegendes Element (9, 12, 13, 17) zum Entnehmen der Produkte (3) aus der Zufuhrteilungseinrichtung (8) umfasst, wobei die Teilungsvorrichtung eine Rampe umfasst, von der das Nahrungsmittelprodukt herunterfällt oder -rutscht, wobei sich die Rampe in einer direkten Strömungsverbindung mit der Zuführung (5) befindet, sodass das Nahrungsmittelprodukt entlang der Rampe rutscht und/oder fällt und somit durch Schwerkraft zu einem der Auslässe geleitet wird, **dadurch gekennzeichnet, dass** die Teilungsvorrichtung (7) trogförmig ist.

2. Teilungsvorrichtung (7) nach Anspruch 1, **dadurch gekennzeichnet, dass** sie eine Vibrationseinrichtung (9) umfasst, die vorzugsweise dazu ausgelegt ist, die gesamte Teilungsvorrichtung (7) oder zumindest einen Teil davon zu vibrieren.

3. Teilungsvorrichtung (7) nach einem der vorstehenden Ansprüche, **dadurch gekennzeichnet, dass** die gesamte Vorrichtung geschlossen ist.

4. Nahrungsmittelproduktbeschichtungsvorrichtung (4), eine Teilungsvorrichtung (7) nach einem der vorstehenden Ansprüche umfassend.

5. Nahrungsmittelproduktbeschichtungsvorrichtung (4) nach Anspruch 4, **dadurch gekennzeichnet, dass** die gesamte Vorrichtung (7) mit Einrichtungen verbunden ist, die staubbelastete Luft davon und/oder von der Nahrungsmittelproduktbeschichtungsvorrichtung (4) absaugen.

6. Nahrungsmittelproduktbeschichtungsvorrichtung (4) nach einem der Ansprüche 4 oder 5, **dadurch gekennzeichnet, dass** jeder Auslass mit einem Trommelbeschichtungssystem (4) und vorzugsweise einer kompakten Streuvorrichtung an der Auslaufseite der Trommeln versehen ist.

## Revendications

1. Dispositif de division (7) d'un dispositif d'enrobage de produits alimentaires pour diviser une alimentation en produits alimentaires (14) en plusieurs flux (15), le dispositif de division (7) comprenant une entrée (16) et plusieurs sorties (11), les sorties (11) étant situées sous les entrées (16), le dispositif (7) comprenant en outre un moyen de division d'alimentation en produits en forme de paroi ou nervure (8) situé entre deux sorties (11) adjacentes et un élément oscillant, vibrant, rotatif et/ou se déplaçant linéairement (9, 12, 13, 17) pour retirer les produits (3) du dispositif de division d'alimentation (8), le dispositif de division comprenant une rampe à partir de laquelle le produit alimentaire tombe ou glisse, la rampe étant en liaison directe avec l'alimentation (5), de sorte que le produit alimentaire glisse et/ou tombe le long de la rampe et soit ainsi dirigé vers l'une des sorties par la force gravitationnelle, **caractérisé en ce que** le dispositif de division (7) a la forme d'une auge.

2. Dispositif de division (7) selon la revendication 1, **caractérisé en ce qu'**il comprend un moyen de vibration (9), qui est de préférence conçu pour faire vibrer le dispositif de division (7) tout entier ou au moins une partie de celui-ci.

3. Dispositif de division (7) selon l'une quelconque des revendications précédentes, **caractérisé en ce que** le dispositif tout entier est fermé.

4. Dispositif d'enrobage de produit alimentaire (4) comprenant un dispositif de division (7) selon l'une des revendications précédentes.

5. Dispositif d'enrobage de produit alimentaire (4) selon la revendication 4, **caractérisé en ce que** le dispositif (7) tout entier est relié à un moyen qui en extrait l'air chargé de poussière et/ou au dispositif d'enrobage de produit alimentaire (4).

6. Dispositif d'enrobage de produit alimentaire (4) selon l'une quelconque des revendications 4 ou 5, **caractérisé en ce que** chaque sortie est combinée à un système d'enrobage à tambour (4) et, de préférence, à un épandeur compact du côté sortie des tambours.
